Europäisches Patentamt

European Patent Office

Office européen des brevets

(11) Numéro de publication: **0 423 023 A1**

# DEMANDE DE BREVET EUROPEEN

(21) Numéro de dépôt: 90402816.4

(22) Date de dépôt: 09.10.90

(51) Int. Cl.5: **G09B 21/00**

(30) Priorité: 09.10.89 FR 8913130

(43) Date de publication de la demande:
17.04.91 Bulletin 91/16

(84) Etats contractants désignés:
DE ES NL

(71) Demandeur: **Montane Ioan**
**Villa Fontenay**
**F-75019 Paris(FR)**

(72) Inventeur: **Montane Ioan**
**Villa Fontenay**
**F-75019 Paris(FR)**

(74) Mandataire: **Netter, André et al**
**Cabinet NETTER, 40, rue Vignon**
**F-75009 Paris(FR)**

(54) Procédé et dispositif de repérage dynamique et résumé en lecture pour un appareil avec afficheur braille ou synthèse vocale.

(57) L'invention concerne un procédé et un dispositif de repérage dynamique en lecture d'un endroit quitté brutalement et un procédé et un dispositif de réalisation d'un résumé synthétique d'un écran informatique.

Le dispositif comprend une unité centrale (1) comportant un premier pointeur xy (2) pour indiquer la position du "chien" et un second pointeur xy (3) pour indiquer la position de l'afficheur braille. Les informations sont affichées sur un afficheur braille (4) ou sont prononcées sur un synthétiseur de parole (5). Les commandes de l'opérateur sont données au clavier (6). L'image de l'écran informatique a été reconstituée dans une zone de mémoire (7). En appliquant une variante de réalisation du résumé selon l'invention, on obtient les informations présentées dans l'encadrement (8).

Le procédé et le dispositif selon l'invention est particulièrement destiné aux appareils pour les non-voyants dans la lecture d'un écran PC, Minitel ou centrale téléphonique.

Fig. 1

## PROCÉDÉ ET DISPOSITIF DE REPÉRAGE DYNAMIQUE ET RÉSUMÉ EN LECTURE POUR UN APPAREIL AVEC AFFICHEUR BRAILLE OU SYNTHÈSE VQCALE

La présente invention concerne le repérage dynamique d'un endroit d'un écran informatique quitté brutalement en lecture par l'opérateur et le résumé synthétique dudit écran informatique.

Elle trouve une application en micro-informatique et plus particulièrement dans le traitement des écrans informatiques du type PC, Minitel, ou centrale téléphonique par un non-voyant qui utilise un appareil avec un afficheur braille ou à synthèse vocale pour le traitement desdits écrans informatiques.

Les appareils actuels destinés aux non-voyants pour la lecture d'un écran informatique ne permettent pas un repérage dynamique intelligent de la dernière position de lecture d'un texte avant un saut brutal à un autre endroit particulier du texte. Par exemple, pour la lecture d'un écran Minitel, l'opérateur qui commence à lire l'écran du début jusqu'à un endroit donné d'où il veut se déplacer brutalement pour lire une ligne spéciale telle que la ligne zéro, ne sait pas retourner automatiquement à l'endroit qu'il a brutalement quitté.

Au contraire, un clairvoyant peut retourner très facilement à l'endroit quitté grâce à la grande puissance de synthèse de l'oeil humain ou purement et simplement en laissant un doigt à l'endroit quitté.

Or, l'opérateur non-voyant n'ayant pas ces possibilités, est obligé de recommencer la lecture à partir du début de la page.

Par ailleurs, les appareils actuels destinés aux non-voyants ne permettent pas de donner un aperçu du contenu de l'écran. En effet, un opérateur clairvoyant lit "en diagonale" et se fait "une idée" du contenu de la page tandis que le non-voyant est obligé de lire partiellement ou totalement la page, opération qui est lente aussi bien à l'aide d'un afficheur braille qu'avec une synthèse vocale.

La présente invention permet de remédier à ces inconvénients.

Selon une définition générale de l'invention, un curseur fictif dénommé pour la circonstance par le nom suggestif de "chien" accompagne systématiquement la zone d'affichage braille ou la position de lecture du synthétiseur vocal tout le temps que celui-ci se déplace dans des endroits adjacents au précédent et le "chien" reste sur place comme repère si le déplacement est brutal, c'est-à-dire dans un endroit non adjacent, permettant ainsi le retour, sur commande de l'opérateur, en l'endroit de la zone d'affichage braille ou de la position de lecture du synthétiseur vocal ainsi repéré par le chien.

Selon un autre aspect de l'invention, la lecture en résumé de l'écran réel ou fictif est réalisée par la lecture et la sélection du mot le plus long ou d'une suite de mots les plus longs de chaque ligne du texte, ou de groupes de lignes ou groupes de mots compris entre deux signes de ponctuation prédéterminés ou toute autre combinaison entre le repérage ligne et un signe de ponctuation prédéterminé.

En pratique, le dispositif pour la mise en oeuvre du procédé selon l'invention comprend une unité centrale à microprocesseur avec logique digitale, mémoire et programmes associés propre à matérialiser la position du "chien" par un pointeur de coordonnées xy et à permettre le repositionnement de la zone d'affichage braille ou de la position de lecture du synthétiseur vocal sur la position du "chien" à la suite d'une commande prédéterminée de l'opérateur sur un clavier.

En outre, l'unité centrale est propre à lire et à trier le ou les mots les plus longs de chaque ligne ou de chaque groupe de plusieurs lignes de l'écran ou de chaque groupe de mots compris entre deux signes de ponctuation prédéterminés ou toute autre combinaison entre les repères ligne et un signe de ponctuation prédéterminé et à afficher ou prononcer ce ou ces mots l'un derrière l'autre comme résumé synthétique de l'écran.

D'autres caractéristiques et avantages de l'invention apparaîtront à la lumière de la description détaillée ci-après et des dessins annexés, dans lesquels la figure unique représente un exemple du dispositif selon l'invention.

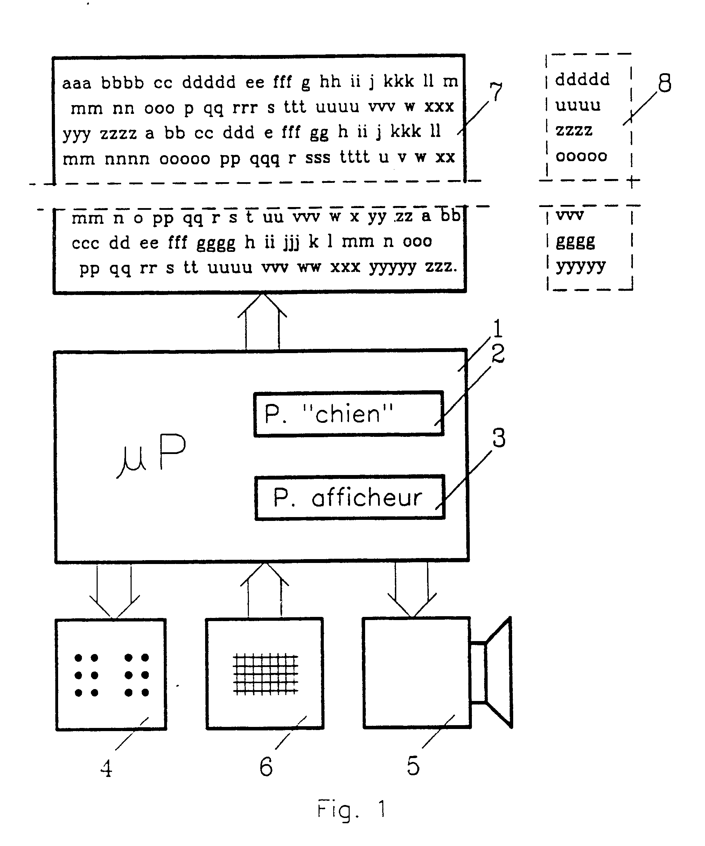

Le dispositif représenté sur la figure 1 comprend une unité centrale à microprocesseur avec logique et mémoire associée 1 qui contient entre autres registres, un pointeur xy avec la position du "chien" 2 et un pointeur xy avec la position de l'affichage braille ou la position de lecture du synthétiseur vocal 3. L'unité centrale affiche les informations adressées par le pointeur 3 sur un afficheur braille 4, ou les prononce sur un synthétiseur 5 suite à une commande donnée à un clavier 6.

L'unité centrale 1 génère l'image de l'écran dans une zone de mémoire 7. Un résumé synthétique réalisé selon une variante de l'invention est présenté dans un cadre 8.

Un exemple de repérage automatique et dynamique selon l'invention peut être réalisé de la manière suivante. Pour commencer, on considère que le "chien" et la zone d'affichage 4 sont positionnés à un même endroit. Il en résulte que le contenu des deux pointeurs 2 et 3 est identique. A chaque déplacement adjacent (c'est-à-dire par exemple un saut de ligne de 1 à gauche, à droite, en haut, ou en bas) de la zone d'affichage, suite à une commande donnée par le clavier 6, le contenu du pointeur 3 est transféré dans le pointeur 2. Si à un moment donné, à l'aide du clavier 6, on commande un saut brutal (c'est-à-dire un saut de ligne à droite supérieur à 1 par exemple), de la zone d'affichage 4, le contenu du pointeur 2 reste inchangé et l'affichage peut continuer à être déplacé mais sans le "chien". Le "chien" reste ainsi comme repère sur l'endroit précédant le saut brutal.

Ainsi grâce à l'invention, l'opérateur non-voyant qui désire revenir à l'endroit de l'écran précédant le saut brutal, appuie sur une touche prédéterminée du clavier pour commander le retour du curseur sur l'endroit ainsi repéré par le chien.

Il est à remarquer qu'à tout moment, on peut donner la commande de positionner la zone d'affichage de lecture sur le "chien" ou vice et versa, opération qui s'exécute par simple transfert du contenu du pointeur 2 dans le pointeur 3 ou du pointeur 3 dans le pointeur 2 pour que le "chien" recommence à accompagner la zone d'affichage.

Un exemple de réalisation de résumé de la page mémoire 7 selon l'invention est présenté dans un encadrement 8. Dans la mémoire 7, on a présenté un texte avec des mots fictifs de longueur variable. Ici, l'opération de résumé de la page selon l'invention consiste à lire et à sélectionner le mot le plus long de chaque ligne. En conséquence, le résumé de la page 7 est reporté dans l'encadrement 8 qui va être ou affiché sur l'afficheur braille 4 ou prononcé sur le synthétiseur vocal 5 de manière automatique au rafraîchisse ment de la page ou manuelle sur la commande donnée par le clavier 6.

Le procédé et le dispositif selon l'invention est particulièrement destiné aux appareils pour les non-voyants dans la lecture d'un écran PC, Minitel ou centrale téléphonique.

## Revendications

1. Procédé de repérage dynamique en lecture pour un appareil braille avec afficheur ou synthèse vocale, caractérisé en ce qu'un curseur fictif dénommé pour la circonstance du nom suggestif de "chien" accompagne systématiquement la zone d'affichage braille ou la position de lecture du synthétiseur vocal pendant que ladite zone d'affichage braille ou ladite position de lecture du synthétiseur vocal se déplace dans des endroits adjacents au précédent endroit tandis que le "chien" reste sur place comme repère si le déplacement est brutal, c'est-à-dire dans un endroit non adjacent, ce qui permet le retour, sur commande de l'opérateur, en l'endroit de la zone d'affichage braille ou de la position de lecture du synthétiseur vocal ainsi repéré par le chien.

2. Procédé automatique de résumé du contenu d'une page d'un écran informatique du type ordinateur personnel, minitel ou centrale téléphonique pour un appareil avec afficheur braille ou synthèse vocale, caractérisé en ce que la lecture en résumé dudit écran informatique est réalisée par la lecture et la sélection du mot le plus long ou d'une suite de mots les plus longs de chaque ligne dudit écran ou de groupes de lignes ou groupes de mots compris entre deux signes de ponctuation prédéterminés ou toute autre combinaison entre le repérage ligne et un signe de ponctuation prédéterminé.

3. Dispositif pour la mise en oeuvre du procédé selon la revendication 1, caractérisé en ce qu'il comprend une unité centrale à microprocesseur avec logique digitale, mémoire et programmes associés (1) propre à matérialiser la postion d'un "chien" par un pointeur de coordonnées xy (2) et à permettre le repositionnement de la zone d'affichage braille (4) ou de la position de lecture du synthétiseur vocal (5) sur la position du "chien" à la suite d'une commande prédéterminée de l'opérateur sur un clavier (6).

4. Dispositif pour la mise en oeuvre du procédé selon la revendication 2, caractérisé en ce qu'il comprend une unité centrale (1) propre à trier le ou les mots les plus longs de chaque ligne ou de chaque groupe de plusieurs lignes de l'écran ou de chaque groupe de mots compris entre deux signes de ponctuation prédéterminés ou toute autre combinaison entre les repères ligne et un signe de ponctuation prédéterminé, et à afficher ou prononcer ce ou ces mots ainsi triés l'un derrière l'autre comme résumé synthétique de l'écran.

aaa bbbb cc ddddd ee fff g hh ii j kkk ll m
mm nn ooo p qq rrr s ttt uuuu vvv w xxx
yyy zzzz a bb cc ddd e fff gg h ii j kkk ll
mm nnnn ooooo pp qqq r sss tttt u v w xx

7

ddddd
uuuu
zzzz
ooooo

8

mm n o pp qq r s t uu vvv w x yy zz a bb
ccc dd ee fff gggg h ii jjj k l mm n ooo
pp qq rr s tt uuuu vvv ww xxx yyyyy zzz.

vvv
gggg
yyyyy

μP

P. "chien"  1 2

P. afficheur  3

4  6  5

Fig. 1

**Office européen
des brevets**

**RAPPORT DE RECHERCHE
EUROPEENNE**

Numéro de la demande

**EP 90 40 2816**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | DE-A-3 807 064 (HARTMUT STOLPER) <br> * Colonne 3, ligne 56 - colonne 7, ligne 55; revendications; figures * | 1,3 | G 09 B 21/00 |
| Y | FR-A-2 612 312 (INSTITUT NATIONAL DE LA SANTE ET DE LA RECHERCHE MEDICALE) <br> * Page 4, ligne 11 - page 14, ligne 13; revendications; figures * | 1,3 | |
| Y | FR-A-2 600 438 (A. GRUSON et al.) <br> * Page 2, ligne 19 - page 21, ligne 3; revendications; figures * | 1,3 | |
| A | DE-A-3 527 065 (W. BOLDT) <br> * Colonne 1, ligne 54 - colonne 2, ligne 63; revendication * | 1-3 | |

**DOMAINES TECHNIQUES
RECHERCHES (Int. Cl.5)**

G 09 B
G 06 F

Le présent rapport de recherche a été établi pour toutes les revendications

| Lieu de la recherche | Date d'achèvement de la recherche | Examinateur |
|---|---|---|
| La Haye | 14 janvier 91 | GORUN M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur. mais publié à la date de dépôt ou après cette date
D : cité dans la demande
L : cité pour d'autres raisons
 
& : membre de la même famille. document correspondant